# EUROPÄISCHE PATENTANMELDUNG

(11) **EP 1 065 837 A2**
(43) Veröffentlichungstag der Anmeldung: **03.01.2001**
(21) Anmeldenummer: 00111385.1
(22) Anmeldetag: 26.05.2000
(51) Int. Cl.: H04L 12/56

(54) **Least-cost-routing-Einheit**

(30) Priorität: 28.06.1999 DE 19929629
(71) Anmelder: SIEMENS AKTIENGESELLSCHAFT, 80333 München (DE)
(72) Erfinder: Schönfeld, Norbert, 44145 Dortmund (DE)

(57) **Zusammenfassung**

Die Least-Cost-Routing-Einheit (LCR) ist über eine erste Anschlußeinheit (T-AB) mit einer Sprachinformationen übermittelnden Kommunikationseinrichtung (KE) und über eine zweite Anschlußeinheit (N-AB) mit mindestens einem Kommunikationsnetz (KN1,...,KN3) verbindbar. Des weiteren weist die Least-Cost-Routing-Einheit (LCR) eine Verbindungseinheit zum Vermitteln einer Kommunikationseinrichtungs-individuellen Verbindung zwischen der Least-Cost-Routing-Einheit (LCR) und einem Computernetzwerk (IP-N) und eine Steuereinheit zur Auswahl eines der Kommunikationsnetze (KN1,...,KN3) oder des Computernetzwerkes (IP-N) anhand einer von der Kommunikationseinrichtung (KE) an die Least-Cost-Routing-Einheit (LCR) übermittelten Ziel-Rufnummerninformation auf.

## Beschreibung

Die vorliegende Erfindung betrifft eine Least-Cost-Routing-Einheit zum Anschluß an eine Kommunikationseinrichtung und mindestens ein Kommunikationsnetz gemäß dem Oberbegriff des Patentanspruchs 1.

Aufgrund einer zunehmenden globalen Ausrichtung von Unternehmen nimmt die Nutzung von Telekommunikationsdiensten zur Übermittlung von Sprache und Daten ständig zu. Dies hat zur Folge, daß die durch diese Telekommunikationsdienste verursachten Kosten ständig steigen und zu einem erheblichen Kostenfaktor für die Unternehmen werden, die Möglichkeiten zur Reduzierung dieser Kosten suchen.

Eine Möglichkeit diese Kosten zu reduzieren besteht in dem sogenannten Least-Cost-Routing-verfahren, bei dem im Rahmen eines Verbindungsaufbaus der kostengünstigste Verbindungsweg zwischen zwei Kommunikationsteilnehmern ausgewählt wird. Aus dem Artikel "Kostensenken mit System - Least Cost Routing", IK, Heft 48, Berlin, 1998, Seite 23, ist beispielsweise ein sogenannter 'Least Cost Router' zum Anschluß zwischen einer Telekommunikationsanlage und einem Kommunikationsnetz bekannt, der im Rahmen eines Verbindungsaufbaus zwischen zwei Kommunikationsendgeräten verbindungsindividuell den für die einzurichtende Kommunikationsverbindung günstigsten Kommunikationsnetzanbieter ermittelt und für einen Verbindungsaufbau die entsprechende Vorwahl des ermittelten Kommunikationsnetzanbieters automatisch vor die am rufenden Kommunikationsendgerät eingegebene Rufnummer anfügt.

Eine weitere Möglichkeit Daten kostengünstig übermitteln zu können bieten Computernetzwerke, wie beispielsweise das sogenannte 'Internet' oder beliebige lokale Netzwerke LANs (Lokal Area Network). Aus dem Artikel von Michael Wagner: "Szenarien der Internet-Telefonie", NTZ, Heft 5, 1998, Seiten 48 - 49, ist es beispielsweise bekannt, eine Übermittlung von Sprachdaten zwischen zwei Kommunikationsteilnehmern über das 'Internet' bzw. das sogenannte 'Intranet' eines Unternehmens zu realisieren. Eine Verbindung zweier - jeweils einem Kommunikationsteilnehmer zugeordneter - herkömmlicher Telefone über das 'Internet' bzw. das 'Intranet' erfolgt dabei mittels spezieller, einen Zugang zum 'Internet' bzw. 'Intranet' realisierenden Einrichtungen, sogenannter 'Interworking Units' - in der Literatur häufig auch mit 'Telefony Internet Server' TIS bezeichnet. Der rufende Kommunikationsteilnehmer wählt zunächst die ihm zugeordnete - über ein herkömmliches Fernsprechnetz mit dem rufenden Telefon, bzw. mit der dem rufenden Telefon zugeordneten Telekommunikationsanlage verbundene - erste 'Interworking Unit' an und teilt dieser die Adresse des gerufenen Telefons mit. Die erste 'Interworking Unit' ermittelt anhand der übermittelten Adresse des gerufenen Telefons eine Adresse - die IP-Adresse (Internet Protokoll) - einer dem gerufenen Telefon bzw. der dem gerufenen Telefon zugeordneten Kommunikationsanlage zugeordneten zweiten 'Interworking Unit'. Ausgehend von der ersten 'Interworking Unit' wird anschließend mittels der ermittelten IP-Adresse eine Verbindung über das 'Internet' bzw. 'Intranet' zu der zweiten 'Interworking Unit' aufgebaut, welche ihrerseits eine Verbindung zu dem gerufenen Telefon aufbaut.

Eine Verbindung der beiden Kommunikationsteilnehmer über das 'Internet' bzw. 'Intranet' - im Sinne einer 'Internet-Telefonie' - ist dabei jedoch nur auf Initiative des rufenden Kommunikationsteilnehmers, d.h. durch eine manuelle Anwahl der dem rufenden Kommunikationsteilnehmer zugeordneten 'Interworking Unit' möglich. Hierzu benötigt der rufende Kommunikationsteilnehmer jedoch vor dem Verbindungsaufbau eine Information darüber, ob und wie mit dem gewünschten Kommunikationspartner eine Kommunikationsverbindung über das 'Internet' bzw. 'Intranet' möglich ist.

Der vorliegenden Erfindung liegt die Aufgabe zugrunde, Maßnahmen vorzusehen, durch welche eine Übermittlung von Sprachinformation über Computernetzwerke - im Sinne der 'Internet-Telefonie' - verbessert wird.

Gelöst wird die Aufgabe ausgehend von den Merkmalen des Oberbegriffs des Patentanspruchs 1 durch dessen kennzeichnenden Merkmale.

Hierbei wird durch die erfindungsgemäße Least-Cost-Routing-Einheit zusätzlich zu einem Verbindungsaufbau über eine Mehrzahl von Kommunikationsnetzen auch ein Verbindungsaufbau über ein Computernetzwerk - wie z.B. das 'Internet' oder ein lokales Netzwerk LAN - ermöglicht. Die Übermittlung von Sprachinformationen über das Computernetzwerk wird dabei durch die Least-Cost-Routing-Einheit in Abhängigkeit einer empfangenen Ziel-Rufnummerninformation automatisch eingeleitet. Ein wesentlicher Vorteil der erfindungsgemäßen Least-Cost-Routing-Einheit besteht somit darin, daß für eine Übermittlung von Sprachinformation über ein Computernetzwerk keine zusätzlichen Maßnahmen des die Übermittlung initialisierenden Teilnehmers erforderlich sind, wodurch der Benutzerkomfort im Rahmen der 'Internet-Telefonie' erhöht wird.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch eine Ausgestaltung einer Verbindungseinheit der Least-Cost-Routing-Einheit derart, daß eine Kommunikationseinrichtungsindividuelle Verbindung zwischen der Least-Cost-Routing-Einheit und dem Computernetzwerk sowohl direkt über eine die Least-Cost-Routing-Einheit mit dem Computernetzwerk verbindende Anschlußeinheit als auch über eines der Kommunikationsnetze und eine das jeweilige Kommunikationsnetz mit dem Computernetzwerk verbindende Netzzugangseinrichtung - in der Literatur häufig als 'Provider' bezeichnet - vermittelt werden kann, ist mittels der erfindungsgemäßen Least-Cost-Routing-Einheit selbst dann eine Übermittlung von Sprachinformationen über ein Computernetzwerk möglich, wenn die Least-Cost-Routing-Einheit keinen eigenen Zugang zum Computernetzwerk aufweist.

Ein weiterer Vorteil von in den Unteransprüchen definierten Ausgestaltungen der Erfindung besteht darin, daß die Least-Cost-Routing-Einheit mittels einer ersten Anschlußeinheit sowohl über eine Teilnehmeranschlußleitung mit einem Kommunikationsendgerät als auch über eine Trunk-Leitung mit einer Kommunikationsanlage verbindbar ist, so daß die Least-Cost-Routing-Einheit einerseits als eigenständige Einrichtung an eine Kommunikationsanlage bzw. ein Kommunikationsendgerät anschließbar, andererseits aber auch als Einheit in die Kommunikationsanlage integrierbar ist.

Ein Ausführungsbeispiel der Erfindung wird im folgenden anhand der Zeichnung näher erläutert.

Dabei zeigen:
- Fig. 1:: ein Strukturbild zur schematischen Darstellung einer ersten und einer zweiten miteinander verbundenen, jeweils eine erfindungsgemäße Least-Cost-Routing-Einheit aufweisenden Kommunikationsanlage;
- Fig. 2:: ein Ablaufdiagramm zur Veranschaulichung der bei einem Verbindungsaufbau von der ersten zur zweiten Kommunikationsanlage in der ersten Kommunikationsanlage ablaufenden wesentlichen Verfahrensschritte.

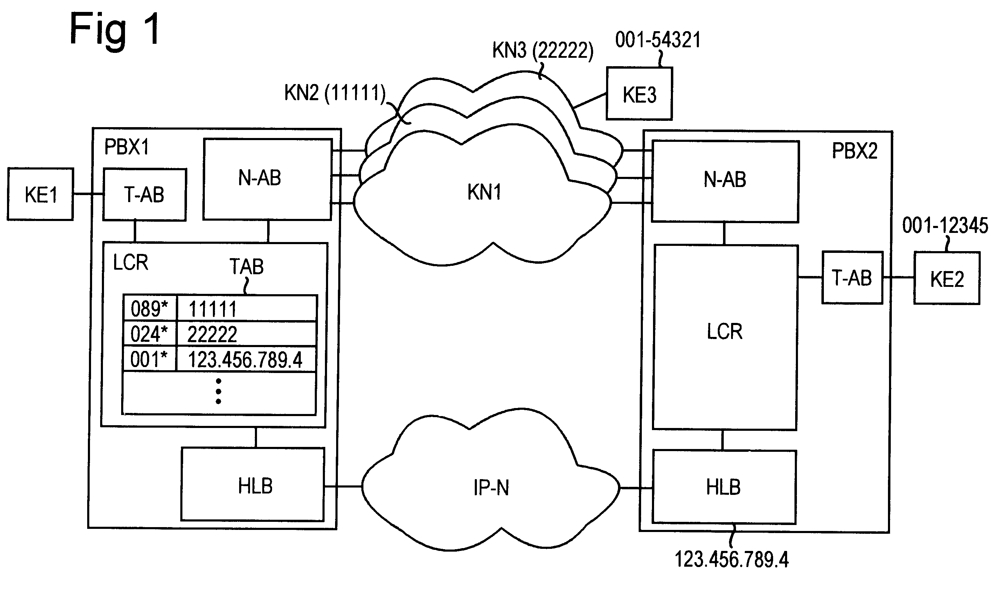

Fig. 1 zeigt eine schematische Darstellung einer ersten und einer zweiten Kommunikationsanlage PBX1, PBX2 (Private Branch eXchange) die jeweils über eine Netzanschlußbaugruppe N-AB mit einer Mehrzahl von Kommunikationsnetzen verbunden sind. Die Kommunikationsnetze sind beispielsweise für eine Übermittlung von Sprachinformationen ausgestaltete analoge, digitale oder ISDN-Fernsprechnetze. Im vorliegenden Ausführungsbeispiel sind drei Kommunikationsnetze KN1, KN2, KN3 dargestellt, die jeweils einem unterschiedlichen Netzanbieter zugeordnet sind.

Im folgenden wird davon ausgegangen, daß im Rahmen eines Verbindungsaufbaus zwischen der ersten Kommunikationsanlage PBX1 und der zweiten Kommunikationsanlage PBX2 standardmäßig eine Kommunikationsverbindung über das erste Kommunikationsnetz KN1 aufgebaut wird. Alternativ kann durch Vorwahl einer, das zweite bzw. das dritte Kommunikationsnetz KN2, KN3 identifizierenden Netzrufnummer 11111, 22222 - in der Figur durch die Klammern angedeutet - eine Kommunikationsverbindung zwischen der ersten Kommunikationsanlage PBX1 und der zweiten Kommunikationsanlage PBX2 über das zweite Kommunikationsnetz KN2 bzw. das dritte Kommunikationsnetz KN3 eingerichtet werden. Ein Verbindungsaufbau über das zweite bzw. dritte Kommunikationsnetz KN2, KN3 kann beispielsweise aus Kostengründen, aufgrund einer höheren Verfügbarkeit oder aufgrund einer höheren zur Verfügung gestellten Übertragungsbandbreite vorteilhaft gegenüber einem Verbindungsaufbau über das erste Kommunikationsnetz KN1 sein.

Über eine Anschlußbaugruppe HLB sind die erste und die zweite Kommunikationsanlage PBX1, PBX2 zusätzlich mit einem IP-(Internet Protokoll)-orientierten Netz IP-N - beispielsweise dem 'Internet' - verbunden. Alternativ kann durch die Anschlußbaugruppe HLB auch ein Anschluß an ein die erste und die zweite Kommunikationsanlage PBX1, PBX2 verbindendes lokales Netzwerk LAN - beispielsweise an ein 'Ethernet', an einen 'Token Ring' oder an einen 'Token Bus' - erfolgen. Über das IP-orientierte Netz IP-N bzw. das lokale Netzwerk LAN wird ein Anschluß von Datenverarbeitungseinrichtungen - beispielsweise von 'Personal Computern' - und eine Datenübermittlung zwischen diesen angeschlossenen Datenverarbeitungseinrichtungen realisiert.

Des weiteren ist über jeweils eine Teilnehmeranschlußbaugruppe T-AB an die erste Kommunikationsanlage PBX1 ein erstes Kommunikationsendgerät KE1 und an die zweite Kommunikationsanlage PBX2 ein zweites Kommunikationsendgerät KE2 angeschlossen. Dem zweiten Kommunikationsendgerät KE2 ist dabei die in den Kommunikationsnetzen KN1, KN2, KN3 jeweils eindeutige Rufnummer 001-12345 zugeordnet. Zusätzlich ist an die Kommunikationsnetze KN1, KN2, KN3 ein drittes Kommunikationsendgerät KE3 angeschlossen, wobei dem dritten Kommunikationsendgerät KE3 die in den Kommunikationsnetzen KN1, KN2, KN3 jeweils eindeutige Rufnummer 001-54321 zugeordnet ist.

Die Netzanschlußbaugruppe N-AB, die Teilnehmeranschlußbaugruppe T-AB und die Anschlußbaugruppe HLB der ersten Kommunikationsanlage PBX1 bzw. der zweiten Kommunikationsanlage PBX2 sind über jeweils eine Least-Cost-Routing-Einheit LCR miteinander verbunden. Im Rahmen eines Verbindungsaufbaus über die erste, bzw. zweite Kommunikationsanlage PBX1, PBX2 wird durch die Least-Cost-Routing-Einheit LCR anhand einer empfangenen, den Verbindungsaufbau einleitenden Zielrufnummer eines der Kommunikationsnetze KN1, KN2, KN3 oder alternativ das IP-orientierte Netz IP-N für einen Verbindungsaufbau ausgewählt. Hierzu ist in der Least-Cost-Routing-Einheit LCR eine Tabelle TAB hinterlegt, in der für das Least-Cost-Routing-Verfahen vorgesehene Rufnummerninformationen mit jeweils einer zugeordneten Netzkenninformation gespeichert sind. In der ersten Kommunikationsanlage PBX1 ist beispielhaft eine Tabelle TAB mit drei gespeicherten Rufnummerninformationen 089*, 024*, 001* dargestellt.

Hierbei ist in der ersten Kommunikationsanlage PBX1 bei einem Empfang einer Rufnummer beginnend mit einer Rufnummerninformation 089 anhand der zugehörig gespeicherten Netzvorwahl 11111 ein Verbindungsaufbau über das zweite Kommunikationsnetz KN2 vorgesehen. Bei einem Empfang einer Rufnummer beginnend mit einer Rufnummerninformation 024 ist durch die zugehörig gespeicherten Netzvorwahl 22222 ein Verbindungsaufbau über das dritte Kommunikationsnetz KN3 vorgesehen. Für eine Rufnummer beginnend mit der Rufnummerninformation 001 ist als zugehörige Netzkenninformation eine IP-Adresse 123.456.789.4 gespeichert, d.h. es ist ein Verbindungsaufbau über das IP-orientierte Netz IP-N vorgesehen.

Eine Verbindung der Least-Cost-Routing-Einheit LCR mit dem IP-orientierten Netz IP-N erfolgt im vorliegenden Ausführungsbeispiel direkt über die Anschlußbaugruppe HLB. Hierfür ist jeder Anschlußbaugruppe HLB im IP-orientierten Netz IP-N eine eindeutige IP-Adresse zugeordnet. Der Anschlußbaugruppe HLB der zweiten Kommunikationsanlage PBX2 ist beispielsweise die IP-Adresse 123.456.789.4 zugeordnet. In Fällen, in denen die Kommunikationsanlage PBX1, PBX2 über keinen direkten Anschluß an das IP-orientierte Netz IP-N verfügt, wird eine Verbindung zwischen der Least-Cost-Routing-Einheit LCR und dem IP-orientierten Netz IP-N über eines der Kommunikationsnetze KN1, KN2, KN3 und eine, das jeweilige Kommunikationsnetz KN1, KN2, KN3 mit dem IP-orientierten Netz IP-N verbindende - nicht dargestellte - Netzzugangseinrichtung realisiert. Derartige Netzzugangseinrichtungen werden in der Literatur häufig als 'Netzprovider' bezeichnet.

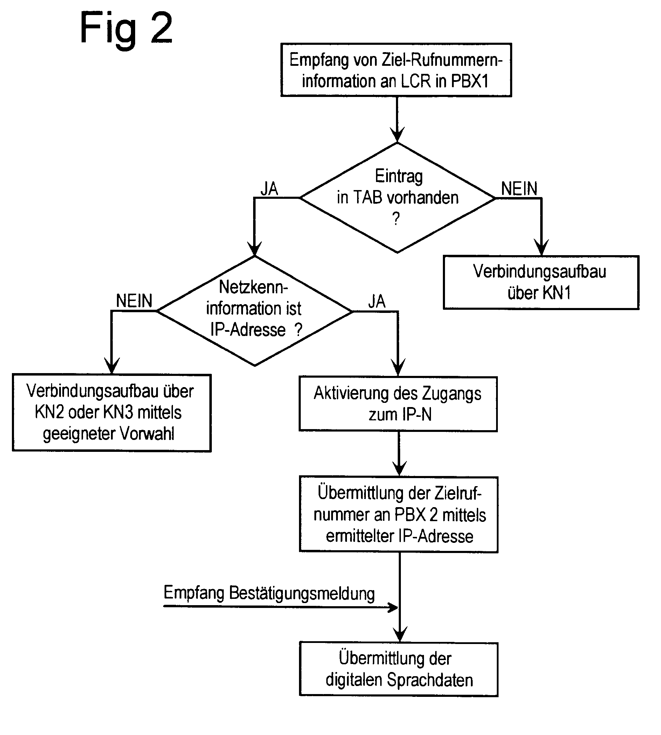

Fig. 2 zeigt ein Ablaufdiagramm zur Veranschaulichung der bei einem Verbindungsaufbau vom ersten zum zweiten Kommunikationsendgerät KE1, KE2 in der ersten Kommunikationsanlage PBX1 ablaufenden wesentlichen Verfahrensschritte. Nach einem Empfang der vom ersten Kommunikationsendgerät KE1 gesendeten, das zweite Kommunikationsendgerät KE2 identifizierenden Rufnummer 001-12345 durch die Least-Cost-Routing-Einheit LCR der ersten Kommunikationsanlage PBX1 wird durch die Least-Cost-Routing-Einheit LCR überprüft, ob in der Tabelle TAB eine entsprechende Rufnummerninformation 001* gespeichert ist. Es wird somit durch die Least-Cost-Routing-Einheit LCR überprüft, ob die empfangene Rufnummer 001-12345 für das Least-Cost-Routing-Verfahren vorgesehen ist.

Ist in der Tabelle TAB keine entsprechende Rufnummerninformation 001* gespeichert wird in herkömmlicher Weise ein Verbindungsaufbau zwischen der ersten und zweiten Kommunikationsanlage PBX1, PBX2 über das erste Kommunikationsnetz KN1 eingeleitet. Ist dagegen eine entsprechenden Rufnummerninformation 001* in der Tabelle TAB gespeichert wird in einem nächsten Schritt überprüft, ob die als zugehörig gespeicherte Netzkenninformation eine IP-Adresse ist. Ist die zugehörige Netzkenninformation keine IP-Adresse wird die als zugehörig gespeicherte Netzvorwahl 11111, 22222 aus der Tabelle TAB ausgelesen und mittels dieser Netzvorwahl 11111, 22222 eine Verbindung zwischen der ersten und der zweiten Kommunikationsanlage PBX1, PBX2 über das zweite, bzw. dritte Kommunikationsnetz KN2, KN3 aufgebaut.

Ist die der ermittelten Rufnummerninformation 001* als zugehörig gespeicherte Netzkenninformation - wie im vorliegenden Ausführungsbeispiel - eine IP-Adresse 123.456.789.4, so wird über die Anschlußbaugruppe HLB der ersten Kommunikationsanlage PBX1 der Zugang zum IP-orientierten Netz IP-N aktiviert. Alternativ kann der Zugang zum IP-orientierten Netz auch über eines der Kommunikationsnetze KN1, KN2, KN3 und einen, das jeweilige Kommunikationsnetz KN1, KN2, KN3 mit dem IP-orientierten Netz IP-N verbindenden 'Netzprovider' erfolgen. Anschließend wird die Rufnummer 001-12345 mittels der ermittelten IP-Adresse 123.456.789.4 an die Anschlußbaugruppe HLB der zweiten Kommunikationsanlage PBX oder alternativ einen der zweiten Kommunikationsanlage PBX2 zugeordneten 'Netzprovider' übermittelt.

Die in der Tabelle TAB gespeicherte IP-Adresse kann alternativ zur IP-Adresse 123.456.789.4 der Anschlußbaugruppe HLB der zweiten Kommunikationsanlage PBX2 oder zur IP-Adresse eines, der zweiten Kommunikationsanlage PBX2 zugeordneten 'Netzproviders' die IP-Adresse eines beliebigen Netzknotens des IP-orientierten Netzes IP-N sein. Nach Empfang der Rufnummer an diesem Netzknoten wird daraufhin durch diesen der Verbindungsaufbau zu einem nächsten Netzknoten im IP-orientierten Netz IP-N bzw. zur zweiten Kommunikationsanlage PBX2 veranlaßt.

Nach einem Empfang der Rufnummer 001-12345 an der zweiten Kommunikationsanlage PBX2 wird überprüft, ob das durch die Rufnummer 001-12345 identifizierte zweite Kommunikationsendgerät KE2 an die zweite Kommunikationsanlage PBX2 angeschlossen ist. Ist dies der Fall, wird direkt eine Verbindung mit dem zweiten Kommunikationsendgerät KE-2 aufgebaut. Infolge eines Zustandekommens der Verbindung mit dem zweiten Kommunikationsendgerät KE2 erfolgt nach einer Übermittlung einer Bestätigungsmeldung an die erste Kommunikationsanlage PBX1 eine Übermittlung der Sprachinformationen zwischen der ersten und der zweiten Kommunikationsanlage PBX1, PBX2 über das IP-orientierte Netz IP-N. Die Übermittlung der digitalisierten Sprachinformationen über das IP-orientierte Netz erfolgt beispielsweise dabei auf Basis des bekannten Übertragungsprotokolls H.323.

Soll dagegen mittels einer - am ersten Kommunikationsendgerät KE1 eingegebenen - Rufnummer 001-54321 eine Verbindung zum dritten Kommunikationsendgerät KE3 aufgebaut werden, ermittelt die zweite Kommunikationsanlage PBX2 das dritte Kommunikationsendgerät KE3 anhand der über das IP-orientierte Netz IP-N übermittelten Rufnummer 001-54321 als nicht an die zweite Kommunikationsanlage PBX2 angeschlossen. Daraufhin wird die Rufnummer 001-54321 an die Least-Cost-Routing-Einheit LCR der zweiten Kommunikationsanlage PBX2 zur weiteren Bearbeitung - analog zu dem oben beschriebenen Verfahren - übermittelt. In Abhängigkeit der in der Least-Cost-Routing-Einheit LCR der zweiten Kommunikationsanlage PBX2 gespeicherten Rufnummern- und Netzkenninformationen erfolgt daraufhin ein Verbindungsaufbau von der zweiten Kommunikationsanlage PBX2 zum dritten Kommunikationsendgerät KE3 über das erste, das zweite oder das dritte Kommunikationsnetz KN1, KN2, KN3. Alternativ kann auch wieder ein Verbindungsaufbau von der zweiten Kommunikationsanlage PBX2 zu einer dritten - nicht dargestellten - Kommunikationsanlage über das IP-orientierte Netz IP-N erfolgen.

Durch eine Ausgestaltung der Least-Cost-Routing-Einheit LCR derart, daß die durch die Teilnehmeranschlußbaugruppe T-AB, die Netzanschlußbaugruppe N-AB und die Anschlußbaugruppe HLB der Kommunikationsanlage PBX1, PBX2 realisierten Anschlüsse in die Least-Cost-Routing-Einheit LCR integriert sind, ist die Least-Cost-Routing-Einheit LCR als eigenständige Einrichtung realisierbar. Eine derartige Least-Cost-Routing-Einrichtung kann somit als sogenannte 'Stand-Alone-Einrichtung' zwischen ein Kommunikationsendgerät - z.B. dem dritten Kommunikationsendgerät KE3 - und den Kommunikationsnetze KN1, KN2, KN3 bzw. das IP-orientierte Netz IP-N zwischengeschaltet werden. Wird der durch die Teilnehmeranschlußbaugruppe T-AB realisierte Anschluß in der Least-Cost-Routing-Einrichtung alternativ als Trunk-Anschluß ausgestaltet, ist eine derartige Least-Cost-Routing-Einrichtung auch direkt zwischen eine Kommunikationsanlage PBX1, PBX2 und die Kommunikationsnetze KN1, KN2, KN3 bzw. das IP-orientierte Netz IP-N zwischenschaltbar.

## Patentansprüche

1. Least-Cost-Routing-Einheit (LCR),
die über eine erste Anschlußeinheit (T-AB) mit einer Sprachinformationen übermittelnden Kommunikationseinrichtung (KE1, KE2) und über eine zweite Anschlußeinheit (N-AB) mit mindestens einem Kommunikationsnetz (KN1,...,KN3) verbindbar ist,
**gekennzeichnet durch**,
- eine Verbindungseinheit zum Vermitteln einer Kommunikationseinrichtungs-individuellen Verbindung zwischen der Least-Cost-Routing-Einheit (LCR) und einem Computernetzwerk (IP-N) und
- eine Steuereinheit zur Auswahl eines der Kommunikationsnetze (KN1,...,KN3) oder des Computernetzwerkes (IP-N) anhand einer von der Kommunikationseinrichtung (KE) an die Least-Cost-Routing-Einheit (LCR) übermittelten Ziel-Rufnummerninformation.

2. Least-Cost-Routing-Einheit (LCR) nach Anspruch 1,
**dadurch gekennzeichnet**,
daß durch die Steuereinheit eine nachfolgende Übermittlung der Sprachinformationen über das ausgewählte Kommunikationsnetz (KN1,...,KN3) oder Computernetzwerk (IP-N) veranlaßbar ist.

3. Least-Cost-Routing-Einheit (LCR) nach Anspruch 1 oder 2,
**dadurch gekennzeichnet**,
daß die Least-Cost-Routing-Einheit (LCR) über eine dritte Anschlußeinheit (HLB) mit dem Computernetzwerk (IP-N) verbunden ist,
und daß die Verbindungseinheit derart ausgestaltet ist, daß die Kommunikationseinrichtungs-individuelle Verbindung der Least-Cost-Routing-Einheit (LCR) mit dem Computernetzwerk (IP-N) direkt über die dritte Anschlußeinheit (HLB) vermittelt wird.

4. Least-Cost-Routing-Einheit (LCR) nach Anspruch 1 oder 2,
**dadurch gekennzeichnet**,
daß die Verbindungseinheit derart ausgestaltet ist, daß die Kommunikationseinrichtungs-individuelle Verbindung der Least-Cost-Routing-Einheit (LCR) mit dem Computernetzwerk (IP-N) über das Kommunikationsnetz (KN1,...,KN3) und eine das Kommunikationsnetz (KN1,...,KN3) mit dem Computernetzwerk (IP-N) verbindende Netzzugangseinrichtung vermittelt wird.

5. Least-Cost-Routing-Einheit (LCR) nach einem der vorhergehenden Ansprüche,
**dadurch gekennzeichnet**,
daß für die Auswahl des Kommunikationsnetzes (KN1,...,KN3) oder des Computernetzwerkes (IP-N) in der Steuereinheit eine Tabelle (TAB) mit für ein Least-Cost-Routing vorgesehenen Rufnummerninformationen (089*, 024*, 001*) und jeweils einer zugeordneten Netzkenninformation gespeichert ist.

6. Least-Cost-Routing-Einheit (LCR) nach Anspruch 4,
**dadurch gekennzeichnet**,
daß als Netzkenninformation für eine Auswahl des Computernetzwerkes (IP-N) eine IP-Adresse (Internet Protokoll) vorgesehen ist.

7. Least-Cost-Routing-Einheit (LCR) nach einem der vorhergehenden Ansprüche,
**dadurch gekennzeichnet**,
daß das Computernetzwerk (IP-N) das Internet oder ein lokales Netzwerk LAN (Local Area Network) ist.

8. Least-Cost-Routing-Einheit (LCR) nach einem der vorhergehenden Ansprüche,
**dadurch gekennzeichnet**,
daß die Least-Cost-Routing-Einheit (LCR) mittels der ersten Anschlußeinheit (T-AB) über eine Teilnehmeranschlußleitung mit einem Kommunikationsendgerät (KE1, KE2) verbunden ist.

9. Least-Cost-Routing-Einheit (LCR) nach einem der Ansprüche 1 bis 7,
**dadurch gekennzeichnet**,
daß die Least-Cost-Routing-Einheit (LCR) mittels der ersten Anschlußeinheit (T-AB) über eine Trunk-Leitung mit einer Kommunikationsanlage (PBX) verbunden ist.

10. Least-Cost-Routing-Einheit (LCR) nach einem der vorhergehenden Ansprüche,
**dadurch gekennzeichnet**,
daß die Least-Cost-Routing-Einheit (LCR) über die zweite Anschlußeinheit (N-AB) mit einem analogen, digitalen oder ISDN-Fernsprechnetz verbunden ist.
